# EUROPÄISCHE PATENTSCHRIFT

(11) **EP 3 319 906 B1**
(45) Veröffentlichungstag und Bekanntmachung des Hinweises auf die Patenterteilung: **22.09.2021**
(21) Anmeldenummer: 16733472.1
(22) Anmeldetag: 28.06.2016
(51) Int. Cl.: C01B 33/14, C01B 33/141, C01B 33/149, C01B 33/159, C09C 1/30

(54) **SIO2 ENTHALTENDE DISPERSION MIT HOHER SALZSTABILITÄT**
SIO2 CONTAINING DISPERSION WITH HIGH SALT STABILITY
DISPERSION CONTENANT SIO2 À STABILITÉ AU SEL ÉLEVÉE

(30) Priorität: 10.07.2015 EP 15176279
(43) Veröffentlichungstag der Anmeldung: 16.05.2018
(73) Patentinhaber: Evonik Operations GmbH, 45128 Essen (DE)
(72) Erfinder: LORTZ, Wolfgang, 63607 Wächtersbach (DE); FISCHER, Ulrich, 63776 Mömbris (DE); PANZ, Christian, 50389 Wesseling-Berzdorf (DE); BERGMANN, Gabriele, 63538 Grosskrotzenburg (DE)
(74) Vertreter: Evonik Patent Association
(86) Internationale Anmeldenummer: PCT/EP2016/064966
(87) Internationale Veröffentlichungsnummer: WO 2017/009033

(56) Entgegenhaltungen:
- US-A1- 2004 037 964
- US-A1- 2005 133 766
- US-A1- 2006 093 541
- US-A1- 2010 092 765
- US-A1- 2013 071 649

## Beschreibung

Die Erfindung betrifft SiO₂ enthaltende Dispersionen mit hoher Salzstabilität, deren Herstellung und Verwendung.

Die Verbesserung der Stabilität von wässerigen Siliciumdioxid-Dispersionen ist Gegenstand der Forschung. Gewöhnlich wird versucht über eine geeignete Oberflächenmodifizierung der Siliciumdioxidpartikel die Dispersion vor Sedimentation und Reagglomeration zu schützen.

So wird beispielsweise in US2004241101 eine stabile pharmazeutische Dispersion offenbart, die mit Polyethylenglykolen oberflächenmodifizierte Siliciumdioxidpartikel enthält. Letztere können beispielsweise erhalten werden, indem man ein mit Ammoniak stabilisiertes kolloidales Siliciumdioxid mit einem polyethoxylierten Trialkoxysilan zur Reaktion bringt.

Die US2002172827 beschäftigt sich unter anderem mit der Herstellung redispergierbarer, nanoskaliger Siliciumdioxidpartikel. Dabei wird ein negativ geladenes Silicasol mit einem Aluminiumoxid beschichtet. Nachfolgend wird als oberflächennmodifizierendes Mittel Natriumdodecylbenzolsulfonat zugegeben.

In WO2004035474 wird ein Verfahren zur Herstellung einer stabilen, wässrigen Dispersion beansprucht, die durch Mischen von silanisierten, kolloidalen Siliciumdioxidpartikeln mit einem organischen Bindemittel erhalten wird. Als Silanisierungsmittel dient beispielsweise ein Glycidylepoxysilan. Das organische Bindemittel kann ein Polyethylenglykol sein.

In Particle and Particle Systems Characterization 2014, 31(1), 94-100 werden kolloidale Siliciumdioxidpartikel mit 2-[Methoxy(polyethylenoxy)propyl]trimethoxysilan oberflächenmodifiziert um die Salzstablität zu erhöhen.

In der WO03/106339 wird eine Fällungskieselsäure beschrieben, die eine BET-Oberfläche von 150 - 400 m²/g, eine CTAB-Oberfläche von 140 - 350 m²/g und einen Al₂O₃-Gehalt von 0,2 - 5 Gew.-% aufweist. Diese Kieselsäure kann mit einer Vielzahl von Silanen modifiziert werden und zu hydrophilen als auch zu hydrophoben Produkten führen. Auch das Verhältnis Silan zu Fällungskieselsäure kann über weite Grenzen variiert werden, nämlich 0.5 bis 50 Teile Silan, bezogen auf 100 Teile Fällungskieselsäure. Die Reaktion kann in der Dispersion der Fällungskieselsäure erfolgen, mit anschließender Trocknung und Temperung. Bedingungen hierzu werden nicht genannt, die Eigenschaften der Dispersion nicht weiter spezifiziert.

In WO02/22745 wird ein Verfahren zum Grundieren von Stahl offenbart, bei dem ein wässriges, Aluminiumoxid-Siliciumdioxid-Sol mit 0,05-2,0 Gew.-% Aluminiumoxid eingesetzt wird. Das Aluminiumoxid-Siliciumdioxid-Sol kann ein Silan-Kupplungsmittel enthalten, das Alkoxysilan-Gruppen und einen organischen Rest mit einer funktionelle Gruppe, wie eine Amino, Epoxid oder Isocyanat enthält.

In WO2010/042672 wird eine Beschichtungszusammensetzung für thermoplastische und duroplastische Substrate offenbart, umfassend eine wässrige Dispersion mit einem pH-Wert von weniger als 7,5. Diese enthält oberflächenmodifizierte Siliciumdioxid-Nanoteilchen, mit einem mittleren Teilchendurchmesser von 40 nm oder weniger, ein Alkoxysilan-Oligomer und ein Silan-Kupplungsmittel. Als Oberflächenmodifizierungsmittel kommen solche in Frage, die einen Rest aufweisen, der mit den Silanolgruppen auf der Siliciumdioxidoberfläche reagieren kann, sowie einen hydrophilen Rest, beispielsweise einen Säurerest, eine Ammoniumrest, einen Polyoxyethylenrest oder eine Hydroxylgruppe.

US 2004/037964 A1 offenbart ein Verfahren zur Grundierung von Stahl und die Beschichtungsmaterialien dafür. Es werden Beschichtungen beschrieben, die ein Al-stabilisiertes Silicasol enthalten, das mit Organosilanen modifiziert sein kann. Partikelgröße der Silicasol Partikel kann 3-100 nm betragen. Der pH-Wert der Dispersion kann mehr als 8 sein. Als Silica-Quelle, werden explizit nur Silica-Sole und optional Alkalimetallsilikate erwähnt, aber keine pyrogenen Kieselsäuren.

US 2005/133766 A1 offenbart wässrige Dispersionen enthaltend wenigstens zwei unterschiedliche Partikeltypen mit einer mittleren Partikelgröße von kleiner 100 µm, die stabil gegenüber der Sedimentation sind. Dispersionen aus US 2005/133766 A1 können pyrogene und oberflächenmodifizierte Kieselsäuren enthalten und können ein Gemisch von Silica und Aluminiumdioxidpartikeln darstellen, aber keine mit Al-modifizierten Silicapartikel. Salzstabilität der Dispersionen wird in US 2005/133766 A1 nicht thematisiert.

Es hat sich jedoch gezeigt, dass für etliche Anwendungen die erreichte Salzstabilität nicht ausreichend ist. Aufgabe der vorliegenden Erfindung war es daher eine Dispersion bereitzustellen, die eine verbesserte Salzstabilität aufweist.

Gegenstand der Erfindung ist eine wässerige Dispersion enthaltend Partikel einer oberflächenmodifizierten, pyrogenen hydrophilen Kieselsäure, wobei
A) die Partikel der oberflächenmodifizierten, hydrophilen Kieselsäure ein Aluminiumatom und einen Kohlenwasserstoffrest umfassen,
   a) das Aluminiumatom über ein Sauerstoffatom an ein Siliciumatom der Partikeloberfläche gebunden ist,
   b) der Kohlenwasserstoffrest ein Siliciumatom umfasst, welches an ein Kohlenstoffatom des Kohlenwasserstoffrestes gebunden ist,
   c) einen mittleren Partikeldurchmesser dso in der Dispersion von 40 - 200 nm, bevorzugt 60 - 150 nm, besitzen und
B) der pH-Wert der Dispersion 8 oder mehr ist.

Unter oberflächenmodifiziert ist zu verstehen, dass die Kieselsäure an ihrer Oberfläche Gruppen trägt, die den Partikeln weitestgehend die hydrophilen Eigenschaften verleiht, die die nicht modifizierte Kieselsäure aufweist. Hierdurch bleibt die wässerige Dispersion stabil. Stabil soll heißen, dass keine nennenswerte Reagglomeration und damit keine Sedimentation erfolgen. Hydrophobierten Partikel würden in einer wässerigen Lösung in kürzester Zeit reagglomerieren und separieren.

Diese Stabilität soll auch in wässerigen Lösungen mit einer hohen Salzkonzentration und bei erhöhten Temperaturen erhalten bleiben. Für die wässerige Dispersion der vorliegenden Erfindung gilt, dass eine 0,5 gewichtsprozentige wässerige Dispersion in einer, Seewasser simulierenden, Referenzlösung wenigstens einen Monat bei einer Temperatur von 60°C stabil ist. Die Testung der Stabilität erfolgt in einer Referenzlösung, die erhalten wird, indem man bei 23°C zu einem Gemisch aus 28,500 g NaCl, 0,220 g NaHCO₃, 4,066 g Na₂SO₄, 1,625 g CaCl₂ x 2 H₂O, 3,162 g MgCl₂ x 6 H₂O, 0,024 g SrCl₂ x 6 H₂O und 0, 721 g KCl so viel vollentsalztes Wasser gibt, bis man 1000 ml Lösung enthält.

In einer bevorzugten Ausführungsform der Erfindung ist der Anteil an AI in der oberflächenmodifizierten, hydrophilen Kieselsäure ≤0,15 mg Al/m² BET-Oberfläche ist. Besonders bevorzugt ist 0,05 - 0,15 mg Al/m² BET-Oberfläche.

Solche Partikel werden, vor der Oberflächenmodifizierung, aus pyrogenen Prozessen erhalten. Dabei werden Siliciumverbindungen in einer Flamme, erzeugt durch die Reaktion von Wasserstoff und Sauerstoff, umgesetzt. Die so erhaltenen Pulver werden als "pyrogen" oder "fumed" bezeichnet. Bei der Reaktion werden zunächst hochdisperse Primärpartikel gebildet, die im weiteren Reaktionsverlauf zu Aggregaten zusammenwachsen. Die Aggregatdimensionen dieser Pulver sind in der Regel im µm-Bereich. Die Partikel weisen an der der Oberfläche Hydroxylgruppen auf. Durch geeignete Vermahlung können diese in den für die vorliegende Erfindung vorteilhaften nm-Bereich überführt werden und nachfolgend mit einem Oberflächenmodifizierungsmittel behandelt werden.

Es hat sich gezeigt, dass die besten Ergebnisse bezüglich der Salz- und Temperaturstabilität der wässerigen Dispersion mit einer oberflächenmodifizierten, hydrophilen Kieselsäure erhalten werden, welche in der Dispersion, einen mittleren Partikeldurchmesser d₅₀ von 40 - 200 nm aufweist. Der mittlere Partikeldurchmesser kann mit den üblichen dem Fachmann bekannten Methoden der Lichtstreuung zur Bestimmung von Teilchengrößenverteilungen in Dispersionen bestimmt werden.

Die oberflächenmodifizierte, hydrophile Kieselsäure kann in Form isolierter Einzelpartikel und/oder in Form von aggregierten Partikeln vorliegen. Im Falle von aggregierten Partikeln beschreibt der mittlere Partikeldurchmesser die Dimension des Aggregates.

Die in der erfindungsgemäßen wässerigen Dispersion vorliegende oberflächenmodifizierte, hydrophile Kieselsäure ist unter anderem dadurch gekennzeichnet, dass die Oberflächenmodifizierung einen Kohlenwasserstoffrest umfasst, der über ein C-Atom an ein Si-Atom gebunden ist. Dier Kohlenwasserstoffrest ist so zu wählen, dass die oberflächenmodifizierte Kieselsäure in der wässerigen Dispersion hydrophile Eigenschaften aufweist. Dies ist beispielsweise von der Anzahl der Kohlenstoffatome des Kohlenwasserstoffrestes und dem Vorhandensein von funktionellen, hydrophilen Gruppen, wie Hydroxy-, Ether-, Amin- oder Carboxylgruppen abhängig. Bevorzugt ist der Kohlenwasserstoffrest durch ein oder mehrere Heteroatome unterbrochen. Besonders bevorzugt ist das Heteroatom des O oder N ist.

Der Kohlenstoffgehalt der oberflächenmodifizierten, hydrophilen Kieselsäure beträgt bevorzugt 3 - 25 Gew.-%.

Bevorzugt wird eine Oberflächenmodifizierung aus der Gruppe bestehend aus Si-(CH₂)ₙ-Yₘ-R ausgewählt, wobei Si das Si-Atom ist, welches über ein C-Atom an einen Kohlenwasserstoffrest gebunden ist, und
n = 1, 2, 3 und m= 0, 1
R ein Rest ist, der keine hydrophobe Eigenschaften verleiht, und bevorzugt für den Fall, dass m = 1 ist
R = -H, -CH₃, -C₂H₅, -OH, -OCH₃, -OC₂H₅, -C(=O)OCH₃, -C(=O)OC₂H₅, -O-C(=O)CH₃, -O-C(=O)CH₃, -O-C(=O)CH=CH₂, -O-C(=O)CH=CH(CH₃), -C(=O)CH₃, -C(=O)H, NH₂; 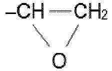 und für den Fall, dass m=0 ist, R den vorgenannten Resten entspricht, jedoch ohne -H, -CH₃, -C₂H₅.
Y = -(OCR¹R²-CR³R⁴)ₒ-, o = 1 - 30, R¹, R², R³, R⁴= unabhängig voneinander H oder CH₃,
   besonders bevorzugt o = 5 - 15 und R¹, R², R³, R⁴= H;
   -(OCR¹R²-CR³R⁴-CR⁵R⁶)ₚ- , p = 1 - 30, R¹, R², R³, R⁴, R⁵, R⁶= unabhängig
oder ein Gemisch der vorgenannten Reste R und Y ist.

In der erfindungsgemäßen wässerigen Dispersion beträgt der Anteil an Wasser bevorzugt 50 - 90 Gew.-% und an oberflächenmodifizierter, hydrophiler Kieselsäure bevorzugt 10 - 50 Gew.-%. Je nach der geplanten weiteren Verwendung kann der Anteil an oberflächenmodifizierter, hydrophiler Kieselsäure weiter reduziert werden.

Die flüssige Phase kann neben Wasser noch geringe Anteile von Alkohol, wie Methanol, Ethanol, Propanol oder Butanol enthalten. Der Anteil an Alkohol beträgt in der Regel weniger als 10 Gew.-%, bevorzugt 3 - 7 Gew.-%, jeweils bezogen auf die Dispersion.

Der pH-Wert der flüssigen Phase der Dispersion beträgt 8 oder mehr, bevorzugt 8 -12, besonders bevorzugt 9 - 11.

Die erfindungsgemäße wässerige Dispersion kann geringe Mengen, weniger als 100 ppm, an üblichen Dispergiermitteln enthalten. Die Anwesenheit von Dispergiermitteln ist im Rahmen der vorliegenden Erfindung jedoch nicht gewünscht. Der stabilisierende Effekt der erfindungsgemäßen Dispersion liegt allein in der oberflächenmodifizierten, hydrophilen Kieselsäure begründet.

Die wässrige Dispersion kann durch ein Verfahren hergestellt werden, bei dem man eine hydrophile Kieselsäure, welche an der Oberfläche Hydroxylgruppen aufweist, in einem wässerigen Lösungsmittel dispergiert und nachfolgend ein Mittel zur Oberflächenmodifizierung hinzufügt, bei dem ein Si-Atom über ein C-Atom an einen Kohlenwasserstoffrest und das Si-Atom weiterhin an ein oder mehrere Hydroxygruppen, Alkoxygruppen, Halogenidgruppen oder Mischungen daraus gebunden ist, und das Gemisch zur Reaktion bringt und gegebenenfalls das Hydrolyseprodukt abtrennt.

Die Menge des Oberflächenmodifizierungmittels richtet sich nach dem gewünschten Verhältnis von Kieselsäure zu Oberflächenmodifizierungmittel. Als geeignete Größe erweist sich der Kohlenstoffanteil der oberflächenmodifizierten Kieselsäure. Dieser ist bevorzugt 3 - 25 Gew.-%. Dabei ist die Menge der bei der Hydrolyse abgespaltenen Hydroxygruppen, Alkoxygruppen oder Halogenidgruppen zu berücksichtigen.

Zur Dispergierung stehen dem Fachmann etliche Methoden zur Verfügung. Zur Herstellung feinteiliger Dispersionen stehen beispielsweise Vorrichtungen wie Ultraschallsonden, Kugelmühlen, Rührwerkskugelmühlen, Rotor-/Statormaschinen, Planetenkneter/-mixer oder Hochenergiemühlen oder Kombinationen zur Verfügung. So kann beispielsweise mittels eines Rotor-/Statorsystems eine Vordispersion hergestellt werden, die in einem nachfolgend Schritt mittels einer Hochenergiemühle weiter vermahlen wird. Durch diese Kombination können beispielsweise extra feine Dispersionen mit einem Partikeldurchmesser von 200 nm oder weniger hergestellt werden. Bei einer Hochenergiemühle wird eine unter einem hohen Druck stehende Vordispersion in zwei oder mehrere Ströme geteilt, die dann über eine Düse entspannt werden und exakt aufeinandertreffen.

Es hat sich als vorteilhaft erwiesen, die Kieselsäure bereits in Form einer wässerigen Dispersion einzubringen.

In der Regel wird das Gemisch zur Reaktion gebracht, indem man einen pH-Wert von 11 oder mehr einstellt, das Gemisch bei einer Temperatur von 50 - 95°C über einen Zeittraum von 1 - 30 Minuten thermisch behandelt und nachfolgend gegebenenfalls einen pH-Wert von 8 - 10 einstellt.

Bei der im Verfahren eingesetzten Kieselsäure handelt es sich um eine, bei der an der Oberfläche Hydroxylgruppen vorliegen. Es wird eine pyrogene Kieselsäure eingesetzt.

Im Rahmen der vorliegenden Erfindung soll der Begriff "Kieselsäure" auch Mischoxide und dotierte Kieselsäuren umfassen, deren Hauptbestandteil mit einem Anteil von mehr als 50 Gew.-%, besser mehr als 90 Gew.-%, am besten mehr als 99 Gew.-%, Siliciumdioxid ist.
Geeignete Mischoxidkomponenten sind beispielsweise AI oder Ti. Besonders geeignet ist ein Si-Al-Mischoxid, bei dem ein Al-Atom Bestandteil der Partikeloberfläche ist und dessen Gewichtsverhältnis Al₂O₃/SiO₂ 0,1:99,9 - 5:95 ist.

Weiterhin können mit Alkalimetall, insbesondere mit Kalium, dotierte Kieselsäuren eingesetzt werden. Der Anteil an Kalium, gerechnet als K₂O, beträgt 0,005-5 Gew.-%, die BET-Oberfläche von 100 bis 350 m²/g. Solche Kieselsäuren sind beispielsweise in WO2008/071462, EP1216956 oder WO2006/134014 offenbart. Diese Kieselsäuren weisen einen sehr niedrigen Aggregrationsgrad auf und sind trotz hoher BET-Oberfläche leicht zu dispergieren.

Für das Verfahren wird das Mittel zur Oberflächenmodifizierung bevorzugt aus der Gruppe bestehend aus X₄₋ₐ[Si-(CH₂)ₙ-Yₘ-R]ₐ ausgewählt, mit
a = 1,2,3; bevorzugt a = 1; n = 1, 2, 3; m = 0, 1,
X = H, OH, OCH₃, OC₂H₅, OCH₂CH₂H₃, OCH(CH₃)₂; Cl,
Y = -(OCR¹R²-CR³R⁴)ₒ-, o = 1 - 30, R¹, R², R³, R⁴ = unabhängig voneinander H oder CH₃, besonders bevorzugt o = 5 - 15 und R¹, R², R³, R⁴ = H;
   -(OCR¹R²-CR³R⁴-CR⁵R⁶)ₚ- , p = 1 - 30, R¹, R², R³, R⁴, R⁵, R⁶ = unabhängig voneinander H oder CH₃,
R ein Rest ist, der keine hydrophobe Eigenschaften verleiht, und bevorzugt für den Fall, dass m = 1 ist
R = -H, -CH₃, -C₂H₅, -OH, -OCH₃, -OC₂H₅, -C(=O)OCH₃, -C(=O)OC₂H₅, -O-C(=O)CH₃, -O-C(=O)CH₃, -O-C(=O)CH=CH₂, -O-C(=O)CH=CH(CH₃), -C(=O)CH₃, -C(=O)H, NH₂; 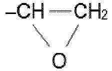 und für den Fall, dass m=0 ist, R den vorgenannten Resten entspricht, jedoch ohne -H, -CH₃, -C₂H₅.
Y = -(OCR¹R²-CR³R⁴)ₒ-, o = 1 - 30, R¹, R², R³, R⁴= unabhängig voneinander H oder CH₃, besonders bevorzugt o = 5 - 15 und R¹, R², R³, R⁴ = H;
   -(OCR¹R²-CR³R⁴-CR⁵R⁶)ₚ- , p = 1 - 30, R¹, R², R³, R⁴, R⁵, R⁶= unabhängig
oder ein Gemisch der vorgenannten Reste R und Y ist.

Es ist ebenso denkbar, dass Y verzweigte Polyethylenglykole umfasst. Hierbei stellt R und wenigstens einer der Reste R¹-R⁶ eine -(OCH₂-CH₂)ᵣ-Gruppierung dar, mit r = 5 - 15.

Besonders bevorzugt kann das Mittel zur Oberflächenmodifizierung aus der Gruppe bestehend aus (CH₃O)₃Si(CH₂)₃-OCH₃, (CH₃O)₃Si(CH₂)₃-(OCH₂CH₂)₃-OCH₃, (CH₃O)₃Si(CH₂)₃-(OCH₂CH₂)₆₋₉-OCH₃, (CH₃O)₃(CH₂)₃-(OCH₂CH₂)₉₋₁₂-OCH₃, (CH₃O)₃Si(CH₂)₃-(OCH₂CH₂)₂₁₋₂₄-OCH₃ und (CH₃CH₂ O)₃Si(CH₂)₃-(OCH₂CH₂)₈₋₁₂OH ausgewählt sein.

Weiterhin kann das Mittel zur Oberflächenmodifizierung aus der Gruppe bestehend aus (RO)₃Si-(CH₂)₃-NH₂,(RO)₃Si-(CH₂)₃-CH-CH₂-NH₂, (RO)₃Si-(CH₂)₃-NH-(CH₂)₂-NH₂, (RO)₃Si-(CH₂)₃-NH-(CH₂)₂NH(CH₂)-NH₂, (RO)₃Si-(CH₂)₃-N-[(CH₂)₂NH(CH₂)-NH₂]₂, R= CH₃, C₂H₅, ausgewählt sein.

Weiterhin sind zur Oberflächenmodifizierung wässerige Zusammensetzungen geeignet, die Organopolysiloxane mit Glycidetheralkylresten, Acryloxyalkylresten und/oder Methacryloxyalkylresten enthalten. Weiterhin kann das Organopolysiloxan als weitere funktionelle Gruppen Aminoalkyl-Reste oder Alkyl-Reste oder Aminoalkyl- und Alkyl-Rest enthalten. Vorzugsweise trägt dabei jedes Silicium im Organopolysiloxan eine funktionelle Gruppe. Die organopolysiloxanhaltige Zusammensetzungen können erhalten werden durch Mischen wasserlöslicher Organosilane der Formel I

H₂N(CH₂)_{f}(NH)_{g}(CH₂)ᵢ-Si(CH₃)ₕ(OR)₃₋ₕ (I),

wobei 0 ≤ f ≤ 6, g = 0 falls f = 0, g =1 falls f >1, 0 ≤ i ≤ 6, 0 ≤ h ≤ 1 und R eine Methyl-, Ethyl-, Propyl- oder Isopropyl-Gruppe sind, bevorzugt Aminopropyltriethoxysilan,
mit
wasserlöslichen, jedoch in wässerigem Medium nicht stabilen Organosilanen der Formel II

X-CH₂O(CH₂)₃-Si(CH₃)ₕ(OR)₃₋ₕ (II),

wobei 0 ≤ h ≤1 ist und R einen Methyl-, Ethyl-, Propyl- oder Isopropyl-Rest darstellt, bevorzugt Glycidyloxypropyltrimethoxysilan und X = 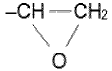 und/oder
Organosilanen der Formel III

H₂C=CR'-COO(CH₂)₃-Si(CH₃)ₕ(OR)₃₋ₕ (III),

wobei 0 ≤ h ≤ 1 ist, R einen Methyl-, Ethyl-, Propyl- oder Isopropyl-Rest und R' einen Methyl- oder Wasserstoff-Rest darstellen, bevorzugt Methacryloxypropyltrimethoxysilan,
und nicht wasserlöslichen Organosilanen der Formel IV

R"-Si(CH₃)ₕ(OR)₃₋ₕ (IV),

wobei 0 ≤ h ≤ 1 ist, R einen Methyl-, Ethyl-, Propyl- oder Isopropyl-Rest und R" einen linearen, verzweigten oder cyclischen Kohlenwasserstoff-Rest mit 1 bis 8 C-Atomen darstellen, bevorzugt Propyltrimethoxysilan,
in dem molaren Verhältnis M = a/(b+c+d), wobei a die Summe der Molzahlen der Organosilane gemäß Formel I, b die Summe der Molzahlen der Organosilane gemäß Formel II sowie c die Summe der Molzahlen der Organosilane gemäß Formel III und d die Summe der Molzahlen der Organosilane gemäß Formel IV sind, mit 0 ≤ M ≤ 3 und mindestens b > 0 oder c > 0. Das Gemisch wird mit einem Wasser/Säure-Gemisch versetzt, der pH-Wert der Reaktionsmischung auf einen Wert zwischen 1 und 8 eingestellt und der Alkohol entfernt.

Die organopolysiloxanhaltigen Zusammensetzungen können idealisiert dargestellt werden gemäß der Formel

HO[Si(A*)(OH)_{z}(CH₃)_{1-z}O]ₐ[Si(B*)(OH)_{y}(CH₃)_{1-y}O]_{b}[Si(C*)(OH)_{w}(CH₃)_{1-w}O]_{c}[Si(D*)(OH)ᵥ(CH₃)₁₋ᵥO]_{d}H(HX)ₑ (V)

wobei A* einen Aminoalkyl-Rest abgeleitet aus der Formel I,
B* einen Glycidetheralkyl-Rest abgeleitet aus der Formel II,
C* einen Acryloxyalkyl- oder Methacryloxyalkyl-Rest abgeleitet aus der Formel III und
D* einen Alkyl-Rest gemäß der allgemeinen Formel IV bedeuten,
HX eine Säure darstellt, wobei X ein anorganischer oder organischer Säure-Rest ist,
v gleich 0 oder 1 und w gleich 0 oder 1 und y gleich 0 oder 1 und z gleich 0 oder 1 und a+b+c+d ≥ 4 und a ≤ e ≤ 2 a sind, mit 0 ≤ a/(b+c+d) ≤ 3, genügen.

Die organopolysiloxanhaltigen Zusammensetzungen weisen bevorzugt einen pH-Wert von 1 - 8, besonders bevorzugt von 3 - 6 auf.

Aus der erfindungsgemäßen wässerigen Dispersion kann durch Abtrennen der flüssigen Phase, beispielsweise durch Sprühtrocknung, ein leicht redispergierbares, oberflächenmodifiziertes Pulver erhalten werden. Dieses Pulver kann durch geringen Energieeintrag, beispielsweise durch Rühren, in eine wässerige Phase eingearbeitet werden, ohne dass es zu einer bemerkenswerten Aggregation der Partikel kommt. Die Partikeldurchmesser in dieser Dispersion können bei 40 - 200 nm liegen.

So entsteht eine oberflächenmodifizierte, hydrophile Kieselsäure, die
a) ein Aluminiumatom aufweist, welches über ein Sauerstoffatom an ein Siliciumatom der Partikeloberfläche gebunden ist,
b) ein Kohlenwasserstoffrest enthält, der ein Siliciumatom umfasst, welches an ein Kohlenstoffatom des Kohlenwasserstoffrestes gebunden ist,
c) eine BET-Oberfläche von 40 - 500 m²/g aufweist und
d) einen mittleren Partikeldurchmesser dso in der Dispersion von 40 - 200 nm, bevorzugt 60 - 150 nm, besitzt und
e) eine Oberflächenmodifizierung aufweist, ausgewählt aus der Gruppe bestehend aus Si-(CH₂)ₙ-Yₘ-R ist, wobei Si das Si-Atom ist, welches über ein C-Atom an einen Kohlenwasserstoffrest gebunden ist, und
   n = 1, 2, 3; m = 0, 1,
   X = H, OH, OCH₃, OC₂H₅, Cl,
   Y = -(OCR¹R²-CR³R⁴)ₒ-, o = 1 - 30, R¹, R², R³, R⁴= unabhängig voneinander H oder CH₃, -(OCR¹R²-CR³R⁴-CR⁵R⁶)ₚ- , p = 1 - 30, R¹, R², R³, R⁴, R⁵, R⁶ = unabhängig voneinander H oder CH₃,
      R ein Rest ist, der keine hydrophobe Eigenschaften verleiht, und bevorzugt für den Fall, dass m = 1 ist

R = -H, -CH₃, -C₂H₅, -OH, -OCH₃, -OC₂H₅, -C(=O)OCH₃, -C(=O)OC₂H₅, -O-C(=O)CH₃, -O-C(=O)CH₃, -O-C(=O)CH=CH₂, -O-C(=O)CH=CH(CH₃), -C(=O)CH₃, -C(=O)H, NH₂; 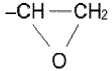 und für den Fall, dass m=0 ist, R den vorgenannten Resten entspricht, jedoch ohne -H, -CH₃, -C₂H₅.
Y = -(OCR¹R²-CR³R⁴)ₒ-, o = 1 - 30, R¹, R², R³, R⁴ = unabhängig voneinander H oder CH₃, besonders bevorzugt o = 5 - 15 und R¹, R², R³, R⁴ = H;
   -(OCR¹R²-CR³R⁴-CR⁵R⁶)ₚ- , p = 1 - 30, R¹, R², R³, R⁴, R⁵, R⁶= unabhängig oder ein Gemisch der vorgenannten Reste R und Y ist

Die BET-Oberfläche der oberflächenmodifizierten, hydrophilen Kieselsäure beträgt 40 - 500 m²/g, besonders bevorzugt 80 - 300 m²/g. Die BET-Oberfläche wird bestimmt nach DIN 66131.

Die erfindungsgemäße wässerige Dispersion und die daraus resultierende oberflächenmodifizierte, hydrophile Kieselsäure kann jeweils als Bestandteil von pharmazeutischen Zubereitungen, kosmetischen Zubereitungen, wasserbasierender Farbe und Lacke, von Reinigungsmitteln, von Geschirrspülmitteln und von Streichfarben in der Papierindustrie verwendet werden.

### Beispiele

### Salzstabilität bei 60°C

In 900 g voll entsalztem Wasser (VE-Wasser) werden 28,500 g NaCl, 0,220 g NaHCO₃, 4,066 g Na₂SO₄, 1,625 g CaCl₂ x 2 H₂O, 3,162 g MgCl₂ x 6 H₂O, 0,024 g SrCl₂ x 6 H₂O, 0, 721 g KCl gelöst und mit VE-Wasser auf 1 Liter aufgefüllt.
99,5 g dieser Lösung werden in einer 125 ml Weithalsflaschen aus NALGENE® FEP (Tetrafluorethylen-Hexafluorpropylen-Copolymer; Thermo Scientifc) vorgelegt und 0,5 g der zu prüfenden Dispersion hinzugegeben und durch Schütteln homogenisiert. Das Gemisch wird bei 60°C im Trockenschrank gelagert und das Auftreten eines Niederschlages visuell kontrolliert.

### Einsatzstoffe

AERODISP® W 7512 S, Evonik Industries, ist eine saure, niedrigviskose, wässrige Kieselsäure-Dispersion mit einem Feststoffgehalt von 12 %. Der zugrundeliegende Feststoff ist AEROSIL® 200, Evonik Industries, eine pyrogene Kieselsäure mit einer BET-Oberfläche von 200 m²/g.

AERODISP® W7520 N, Evonik Industries, ist eine mit Natronlauge stabilisierte, niedrigviskose, wässrige Kieselsäure-Dispersion mit einem Feststoffgehalt von 20%. Der zugrundeliegende Feststoff ist AEROSIL® 200, Evonik Industries, eine pyrogene Kieselsäure mit einer BET-Oberfläche von 200 m²/g.

AERODISP® W 7330 N, Evonik Industries, ist eine mit Natronlauge stabilisierte, wässrige Kieselsäure-Dispersion mit einem Feststoffgehalt von 30%. Der zugrundeliegende Feststoff ist AEROSIL® 130, Evonik Industries, eine pyrogene Kieselsäure mit einer BET-Oberfläche von 130 m²/g.

AERODISP® W 7320 N, Evonik Industries, ist eine mit Natronlauge stabilisierte, wässrige Kieselsäure-Dispersion mit einem Feststoffgehalt von 20%. Der zugrundeliegende Feststoff ist AEROSIL® 130, Evonik Industries, eine pyrogene Kieselsäure mit einer BET-Oberfläche von 130 m²/g.

### Dispersion von kalium-dotierter Kieselsäure

In einem 100 I Edelstahl-Ansatzbehälter werden 45,0 kg Wasser vorgelegt. Anschließend werden mit Hilfe des Saugrüssels der Ystral Conti-TDS 3 (Statorschlitze: 4 mm Kranz und 1 mm Kranz, Rotor/Stator-Abstand ca. 1 mm) unter Scherbedingungen 30 kg kalium-dotierte Kieselsäure eingesaugt. Die kalium-dotierte Kieselsäure entspricht Beipiel P1 aus WO2008/071462. Sie weist eine BET-Oberfläche von 216 m2/g. Der K-Anteil beträgt 0,12 Gew.-%, berechnet als K₂O. Nach Beendigung der Zugabe wird der Einsaugstutzen geschlossen und noch bei 3000 U/min 20 min lang nachgeschert. Mit 20 kg Wasser wird die Dispersion verdünnt und mit Natronlauge der pH-Wert 10,0 eingestellt. Anschließend wird mit Wasser verdünnt um einen SiO₂-Gehalt von 25 Gew.-% zu erreichen und noch einmal ca. 5 Minuten zwecks Homogenisierung nachgeschert.

AERODISP® W 630, Evonik Industries, ist eine wässrige Aluminiumoxid-Dispersion mit einem pH-wert von 3 - 5 und einem Feststoffgehalt von 30%. Der zugrundeliegende Feststoff ist AEROXIDE® Alu C, Evonik Industries, eine pyrogenes Aluminiumoxid mit einer BET-Oberfläche von 100 m²/g.

Natriumaluminatlösung, 10 Gew.-%, hergestellt wasserfreiem technischem Natriumaluminat, Sigma-Aldrich, und VE-Wasser. Einige wenige unlösliche Rückstände werden durch Filtration entfernt.

LUDOX® SM 30, Grace, ist eine wässerige, mit NaOH stabilisierte, kolloidale Silicadispersion mit einer Partikelgröße von 8 nm und einem Gehalt an SiO₂ von 30 Gew.-%.

LUDOX® HS 40, Grace, ist eine wässerige, mit NaOH stabilisierte, kolloidale Silicadispersion mit einer Partikelgröße von 12 nm und einem Gehalt an SiO₂ von 40 Gew.-%.

LUDOX® CL, Grace, ist eine wässerige Dispersion von mit AI umhüllten, kolloidalem Silica mit 22 nm Partikelgröße. Der pH ist 3,5 - 4,5, der Feststoffgehalt 39 - 43 Gew.-%.

### Mittel zur Oberflächenmodifizierung

OM1: 2-[Methoxy(polyethyleneoxy)₆₋₉propyl] trimethoxysilan
OM2: Hydrolysat aus 3-Glycidyloxypropyl-Trimethoxysilan gemäß Beispiel 1, EP-A-832911
OM3: DYNASYLAN® GLYMO, Evonik Industries
Wasser: es handelt es sich um vollentsalztes Wasser; Natronlauge: 25 Gew.-% NaOH; Salzsäure: 20 Gew.-% HCl

### Beispiel 1 (erfindungsgemäß)

Zu einer verdünnen Natriumaluminatlösung aus 10 g VE-Wasser und 2,37 g der filtrierten Natriumaluminatlösung werden 40 g AERODISP® W7320 langsam und unter Rühren zugetropft. Nach der Zugabe läßt man noch 10 Minuten nachrühren. Dann gibt man 5,90 g OM2 hinzu. Anschließend wird für 10 Minuten auf 90°C erhitzt und der pH-Wert mit Salzsäure auf 9 eingestellt.
0,064 mg Al/m² BET-Oberfläche; dso = 128 nm; Stabilität in Referenzlösung bei 60°C: 4 Wochen.

### Beispiel 2 (erfindungsgemäß)

Zu 10 g Wasser werden 2,19 g der Natriumaluminatlösung gegeben. Nun wird unter Rühren tropfenweise 40 g AERODISP® W 7512 S hinzu gegeben und nach der Zugabe 10 Minuten weiter gerührt. Nun werden 3,1 g OM3 tropfenweise hinzugegeben und unter rühren auf 90°C aufgeheizt. Nach 10 Min läßt man auf Raumtemperatur abkühlen und der pH-Wert wird mit Salzsäure auf 9 gestellt.
0,064 mg Al/m² BET-Oberfläche; dso = 109 nm; Stabilität in Referenzlösung bei 60°C: 9 Wochen

### Beispiel 3 (erfindungsgemäß)

Zu 10 g Wasser werden 2,19 g der Natriumalumintlösung gegeben. Nun wird unter Rühren tropfenweise 40 g AERODISP® W 7512 S hinzugegeben und nach der Zugabe 10 Minuten weiter gerührt. Nun werden 6,8 g OM1 tropfenweise hinzugegeben und unter Rühren auf 90°C aufgeheizt. Nach 10 Min läßt man auf Raumtemperatur abkühlen und der pH-Wert wird mit Salzsäure auf 9 eingestellt.
0,064 mg Al/m² BET-Oberfläche; dso = 111 nm; Stabilität in Referenzlösung bei 60°C: 3 Monate

### Beispiel 4 (erfindungsgemäß)

Zu 10 g Wasser werden 3,64 g der Natriumalumintlösung gegeben. Nun wird unter Rühren tropfenweise 40 g AERODISP® W 7520 N hinzu gegeben und nach der Zugabe 10 Minuten weiter gerührt. Nun werden 6,8 g OM1 tropfenweise hinzugegeben und unter Rühren auf 90°C aufgeheizt.

Nach 10 Min läßt man auf Raumtemperatur abkühlen und der pH-Wert wird mit Salzsäure auf 9 gestellt.
0,064 mg Al/m² BET-Oberfläche; dso = 101 nm; Stabilität in Referenzlösung bei 60°C: 4 Wochen

### Beispiel 5 (erfindungsgemäß)

Es werden 400 g Wasser vorgelegt und mit Hilfe eines Dissolvers 45,5 g der Natriumaluminatlösung und 200 g der Dispersion von kaliumdotierter Kieselsäure eingearbeitet. Dieses wird insgesamt 4 mal durchgeführt, in Summe also 182 g Natriumaluminatlösung und 800 g der Dispersion. Mit der letzten Zugabe steigt die Viskosität stark an. Nun werden OM1 unter Rühren hinzu gegeben wobei die Dispersion wieder dünnflüssig wird. Nun wird auf 90°C aufgeheizt und für 30 Minuten die Temperatur gehalten. Nach dem Abkühlen auf Raumtemperatur wird mit Salzsäure ein pH von 9 eingestellt.
0,128 mg Al/m² BET-Oberfläche; dso = 72 nm; Stabilität in Referenzlösung bei 60°C: 4 Wochen

### Beispiel 6 (Vergleichsbeispiel)

Es werden zu 10 g Wasser werden 1,185 g der Natriumaluminatlösung gegeben. Nun werden 10 g AERODISP® W 7320 N langsam und unter Rühren hinzugegeben. Nun folgt wieder eine Zugabe von 1,185 g der Natriumaluminatlösung und 10 g AERODISP® W 7320 N. Dieses Procedere wird noch zweimal wiederholt, so dass insgesamt 4,74 g der Natriumaluminatlösung und 40 g AERODISP® W 7320 N eingesetzt werden. Anschließend wird die erhaltene Dispersion 30 Minuten bei 85°C gealtert.

Nach Zugabe von 7,36 g OM1 zugegeben und es wird noch weitere 15 Minuten bei 85°C gerührt. Nach dem Abkühlen auf Raumtemperatur wird mit Salzsäure ein pH von 9 eingestellt.
0,128 mg Al/m² BET-Oberfläche; dso = 119 nm; Stabilität in Referenzlösung bei 60°C: 1 Woche

### Beispiel 7 (Vergleichsbeispiel)

Zu 40 g Wasser werden unter Rühren 1 g der Natriumaluminatlösung und dann 5 g eines Kieselsols, hergestellt aus 20 g Ludox® HS 40 von Grace und 20 g Wasser, zugegeben. Diese schrittweise Zugabe wird so oft wiederholt bis insgesamt 8 g der Natriumaluminatlösung und 40 g des Kieselsoles hinzugeben wurden. Es entstehen bei der Zugabe der Natriumaluminatlösung kleine Flocken, die sich nach Zugabe der Dispersion wieder langsam auflösen. Nun wird bei 70°C für 3 Stunden weiter gerührt.

Anschließend werden 10 g OM2 hinzugegeben und auf 90°C aufgeheizt. Nach 10 Minuten bei 90°C läßt man auf Raumtemperatur abkühlen und stellt den pH-Wert mit Salzsäure auf pH 9 ein. 0,127 mg Al/m² BET-Oberfläche; Stabilität in Referenzlösung bei 60°C: 3-4 Tage

### Beispiel 8 (Vergleichsbeispiel)

Zu 67 g AERODISP® W 7512 S werden langsam und unter Rühren 11,3 g OM1 gegeben. Es tritt zuerst ein Viskositätsanstieg auf der aber bei weiterer Zugabe wieder abnimmt. Nun wird mit Natronlauge unter Rühren ein pH von 11 eingestellt und die Mischung auf 90°C erwärmt. Nach 10 Minuten bei 90°C wird abgekühlt und mit Salzsäure ein pH von 9 eingestellt.
Stabilität in Referenzlösung bei 60°C: 1 Tag

### Beispiel 9 (Vergleichsbeispiel)

Zu 40 g AERODISP® W 7520 N werden langsam und unter Rühren 11,3g OM1 zugegeben. Nun wird mit Natronlauge unter Rühren ein pH von 11 eingestellt und die Mischung auf 90°C erwärmt. Nach 10 Minuten bei 90°C wird abgekühlt und mit Salzsäure ein pH von 9 eingestellt.
Stabilität in Referenzlösung bei 60°C: 1 Tag

### Beispiel 10 (Vergleichsbeispiel)

Zu 100 g einer mit Wasser auf 10 Gew.-% verdünnten LUDOX® 30 SM Dispersion werden bei 80°C innerhalb von 3 Stunden 4,3 g OM1 unter Rühren hinzu getropft. Es wird bei 80°C 6 Stunden weiter gerührt.
Stabilität in Referenzlösung bei 60°C: 1 Tag

### Beispiel 11 (Vergleichsbeispiel)

Zu 249 g LUDOX® HS 40 werden 30 g OM1 gegeben. Die Dispersion wird auf 80°C erhitzt und bei dieser Temperatur 16 Stunden gerührt.
Stabilität in Referenzlösung bei 60°C: 1 Tag

### Beispiel 12 (Vergleichsbeispiel)

26,7 g LUDOX® CL werden mit 13,3 g Wasser auf 20 Gew.-% verdünnt. Zu diesem Sol werden langsam und unter Rühren 13,0 g OM1 zugegeben. Nun wird mit Natronlauge unter Rühren ein pH von 11 eingestellt und die Mischung auf 90°C erwärmt. Nach 10 Minuten bei 90°C wird abgekühlt und mit Salzsäure ein pH von 9 eingestellt.

Nach zwei Tagen bei 60°C tritt ein wolkiger Niederschlag auf.
0,174 Al/m² BET-Oberfläche (berechnet aus Angaben des Herstellers)
Stabilität in Referenzlösung bei 60°C: 2 Tage

### Beispiel 13 (Vergleichsbeispiel)

26,7 g AERODISP® W 630 werden mit 13,3 g Wasser auf 20 % verdünnt. Zu dieser Dispersion werden langsam und unter Rühren 5,67 g OM1 zugegeben. Nun wird mit Natronlauge unter Rühren ein pH von 11 eingestellt und die Mischung auf 90°C erwärmt. Nach 10 Minuten bei 90°C wird abgekühlt und mit Salzsäure ein pH von 9 eingestellt.
Stabilität in Referenzlösung bei 60°C: 1 Tag

Die erfindungsgemäßen wässerigen Dispersionen der Beispiele 1 - 4 weisen eine sehr gute Stabilität in der Referenzlösung bei erhöhter Temperaturen auf. Diese Stabilität ist bei den Vergleichsbeispielen 5-13 nicht gegeben.

## Patentansprüche

1. Wässerige Dispersion enthaltend Partikel einer oberflächenmodifizierten, pyrogenen hydrophilen Kieselsäure, **dadurch gekennzeichnet, dass**
A) die Partikel der oberflächenmodifizierten, hydrophilen Kieselsäure ein Aluminiumatom und einen Kohlenwasserstoffrest umfassen,
a) das Aluminiumatom über ein Sauerstoffatom an ein Siliciumatom der Partikeloberfläche gebunden ist,
b) der Kohlenwasserstoffrest ein Siliciumatom umfasst, welches an ein Kohlenstoffatom des Kohlenwasserstoffrestes gebunden ist,
c) einen mittleren Partikeldurchmesser dso in der Dispersion von 40 - 200 nm, besitzen und
B) der pH-Wert der Dispersion 8 oder mehr ist.

2. Wässerige Dispersion nach Anspruch 1, **dadurch gekennzeichnet, dass** der Anteil AI in der oberflächenmodifizierten, hydrophilen Kieselsäure ≤ 0,15 mg Al/m² BET-Oberfläche ist.

3. Wässerige Dispersion nach den Ansprüchen 1 oder 2, **dadurch gekennzeichnet, dass** der Kohlenstoffgehalt der oberflächenmodifizierten, hydrophilen Kieselsäure 3 - 25 Gew.-% beträgt.

4. Wässerige Dispersion nach den Ansprüchen 1 bis 3, **dadurch gekennzeichnet, dass** der Kohlenwasserstoffrest durch ein oder mehrere Heteroatome unterbrochen ist.

5. Wässerige Dispersion nach den Ansprüchen 1 bis 4, **dadurch gekennzeichnet, dass** der Kohlenwasserstoffrest aus der Gruppe bestehend aus Si-(CH₂)ₙ-Yₘ-R ausgewählt ist, wobei das Siliciumatom über ein Kohlenstoffatom des Kohlenwasserstoffrests gebunden ist, erhältlich unter Verwendung eines Mittels zur Oberflächenmodifizierung ausgewählt aus der Gruppe bestehend aus
X₄₋ₐ[Si-(CH₂)ₙ-Yₘ-R]ₐ, mit
a = 1,2,3;
X = OH, OCH₃, OC₂H₅, OCH₂CH₂H₃, OCH(CH₃)₂; Cl,
n = 1, 2, 3 und m = 0, 1
Y = -(OCR¹R²-CR³R⁴)ₒ-, o = 1 - 30, R¹, R², R³, R⁴= unabhängig voneinander H oder CH₃, -(OCR¹R²-CR³R⁴-CR⁵R⁶)ₚ- , p = 1 - 30, R¹, R²,R³, R⁴, R⁵, R⁶= unabhängig voneinander H oder CH₃,
für den Fall, dass m = 1 ist
R = -H, -CH₃, -C₂H₅, -OH, -OCH₃, -OC₂H₅, -C(=O)OCH₃, -C(=O)OC₂H₅, -O-C(=O)CH₃, -O-C(=O)CH₃, -O-C(=O)CH=CH₂, -O-C(=O)CH=CH(CH₃), -C(=O)CH₃, -C(=O)H, NH₂; 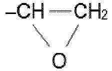 und für den Fall, dass m=0 ist, R den vorgenannten Resten entspricht, jedoch ohne -H, - CH₃,-C₂H₅.
oder ein Gemisch der vorgenannten Reste R und Y ist.

6. Wässerige Dispersion nach den Ansprüchen 1 bis 5, **dadurch gekennzeichnet, dass** in der Dispersion der Anteil an Wasser 50 - 90 Gew.-% und an oberflächenmodifizierter Kieselsäure 10-50 Gew.-% beträgt.

## Claims

1. Aqueous dispersion comprising particles of a surface-modified, pyrogenic hydrophilic silica, **characterized in that**
A) the particles of the surface-modified, hydrophilic silica comprise an aluminium atom and a hydrocarbon radical,
a) the aluminium atom is bonded via an oxygen atom to a silicon atom of the particle surface,
b) the hydrocarbon radical comprises a silicon atom which is bonded to a carbon atom of the hydrocarbon radical,
c) possess an average particle diameter d₅₀ in the dispersion of 40 - 200 nm, and
B) the pH of the dispersion is 8 or more.

2. Aqueous dispersion according to Claim 1,
**characterized in that**
the fraction of Al in the surface-modified, hydrophilic silica is ≤ 0.15 mg Al/m² BET surface area.

3. Aqueous dispersion according to Claims 1 or 2,
**characterized in that**
the carbon content of the surface-modified, hydrophilic silica is 3 - 25 wt%.

4. Aqueous dispersion according to Claims 1 to 3,
**characterized in that**
the hydrocarbon radical is interrupted by one or more heteroatoms.

5. Aqueous dispersion according to Claims 1 to 4,
**characterized in that**
the hydrocarbon radical is selected from the group consisting of Si-(CH₂)ₙ-Yₘ-R, the silicon atom being bonded via a carbon atom of the hydrocarbon radical, obtainable using an agent for surface modification selected from the group consisting of
X₄₋ₐ[Si-(CH₂)ₙ-Yₘ-R]ₐ, where
a = 1, 2 or 3;
X = OH, OCH₃, OC₂H₅, OCH₂CH₂H₃, OCH(CH₃)₂; Cl,
n = 1, 2 or 3 and m = 0 or 1,
Y=-(OCR¹R²-CR³R⁴)ₒ-, o = 1 - 30, R¹, R², R³, R⁴ = independently of one another H or CH₃, - (OCR¹R²-CR³R⁴-CR⁵R⁶)ₚ-, p = 1 - 30, R¹, R², R³, R⁴, R⁵, R⁶ = independently of one another H or CH₃,
R, when m = 1, is -H, -CH₃, -C₂H₅, -OH, -OCH₃, -OC₂H₅, -C(=O) OCH₃, - C(=O)OC₂H₅, -O-C(=O)CH₃, -O-C(=O)CH₃, -O-C(=O)CH=CH₂, -O-C(=O)CH=CH(CH₃), -C(=O)CH₃, - C(=O)H, NH₂; 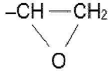 and, when m = 0, corresponds to the aforementioned radicals, but without -H, -CH₃,-C₂H₅,
or is a mixture of the aforementioned radicals R and Y.

6. Aqueous dispersion according to Claims 1 to 5,
**characterized in that**
in the dispersion, the fraction of water is 50 - 90 wt% and of surface-modified silica is 10 - 50 wt%.

## Revendications

1. Dispersion aqueuse contenant des particules d'une silice hydrophile pyrogénée, modifiée en surface, **caractérisée en ce que**
A) les particules de la silice hydrophile, modifiée en surface, comprennent un atome d'aluminium et un radical hydrocarboné,
a) l'atome d'aluminium est lié par l'intermédiaire d'un atome d'oxygène à un atome de silicium de la surface de la particule,
b) le radical hydrocarboné comprend un atome de silicium qui est lié à un atome de carbone du radical hydrocarboné,
c) ont un diamètre moyen de particule d₅₀ dans la dispersion de 40 - 200 nm et
B) le pH de la dispersion est 8 ou plus.

2. Dispersion aqueuse selon la revendication 1, **caractérisée en ce que**
la proportion d'Al dans la silice hydrophile, modifiée en surface, est ≤ 0,15 mg d'Al/m² de surface BET.

3. Dispersion aqueuse selon la revendication 1 ou 2, **caractérisée en ce que**
la teneur en carbone de la silice hydrophile, modifiée en surface, vaut de 3 à 25 % en poids.

4. Dispersion aqueuse selon les revendications 1 à 3, **caractérisée en ce que**
le radical hydrocarboné est interrompu par un ou plusieurs hétéroatomes.

5. Dispersion aqueuse selon les revendications 1 à 4, **caractérisée en ce que**
le radical hydrocarboné est choisi dans le groupe constitué par Si-(CH₂)ₙ-Yₘ-R, l'atome de silicium étant lié par l'intermédiaire d'un atome de carbone du radical hydrocarboné, pouvant être obtenue avec utilisation d'un agent destiné à la modification de surface, choisi dans le groupe constitué pat
X₄₋ₐ[Si-(CH₂)ₙ-Yₘ-R]ₐ, où
a = 1, 2, 3 ;
X = OH, OCH₃, OC₂H₅, OCH₂CH₂H₃, OCH(CH₃)₂ ; Cl,
n = 1, 2, 3 et m = 0, 1
Y=-(OCR¹R²-CR³R⁴)ₒ-, o = 1 - 30, R¹, R², R³, R⁴ = indépendamment les uns des autres H ou CH₃, - (OCR¹R²-CR³R⁴-CR⁵R⁶)ₚ-, p = 1 - 30, R¹, R², R³, R⁴, R⁵, R⁶ = indépendamment les uns des autres H ou CH₃,
dans le cas où m = 1,
R = -H, -CH₃, -C₂H₅, -OH, -OCH₃, -OC₂H₅, -C(=O)OCH₃, -C(=O)OC₂H₅, -O-C(=O)CH₃, -O-C(=O)CH₃, -O-C(=O)CH=CH₂, -O-C(=O)CH=CH(CH₃), -C(=O)CH₃, -C(=O)H, NH₂, 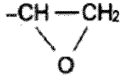 et dans le cas où m=0, R correspond aux radicaux mentionnés ci-dessus, mais hormis -H, -CH₃, -C₂H₅, ou un mélange des radicaux R et Y précités.

6. Dispersion aqueuse selon les revendications 1 à 5, **caractérisée en ce que** dans la dispersion la proportion d'eau vaut de 50 à 90 % en poids et celle de silice modifiée en surface vaut de 10 à 50 % en poids.
